# EUROPEAN PATENT APPLICATION

(11) **EP 2 542 000 A1**
(43) Date of publication of application: **02.01.2013**
(21) Application number: 12174142.5
(22) Date of filing: 28.06.2012
(51) Int. Cl.: H04W 60/00

(54) **Passenger mobile station registration with a vehicle communications system using passenger information**

(30) Priority: 28.06.2011 US 201113170687
(71) Applicant: The Boeing Company, Chicago, IL 60606-2016 (US)
(72) Inventor: Ayotte, Loren T., Everett, WA Washington 98208 (US); Hartze, David C., Everett, WA Washington 98203 (US)
(74) Representative: Carpmaels & Ransford

(57) **Abstract**

A method for registering a mobile station of a passenger may include receiving a request to register the mobile station of the passenger with a passenger communications system on board a vehicle. The method may also include validating a personal or passenger identification number (PIN) for registration with the passenger communications system. The PIN may include at least a portion of a name of the passenger and seat information of the passenger. The method may additionally include registering the mobile station of the passenger with the passenger communications system in response to the PIN being validated. The method may further include providing a predetermined class of service to the passenger based on the PIN.

## Description

### BACKGROUND

Aspects of the present disclosure relate to passenger communications on board a vehicle, such as an aircraft, and more particularly to a system, method and computer program product for passenger mobile station registration with a vehicle communications system using passenger information.

The use of mobile stations including mobile communications devices, such as cellular phones, smart phones, lap top computers, pad computing devices and like, at virtually anywhere the user may be is becoming more and more common place. This includes use of such devices on different modes of transportation or vehicles including passenger aircraft. However, current aircraft communications systems, which are similar to terrestrial cellular telephone systems and may be referred to as picocells, have limited flexibility of secure picocell registration which does not identify passenger seat location on the aircraft. Current aircraft systems obtain passenger names by cross-referencing the mobile number of the mobile station that is being registered by the aircraft communications system to ground cellular network. Cross-referencing the passenger's mobile number requires a data connection from the aircraft to the ground cellular network which requires an expense to be incurred by the air carrier. Additionally, there currently is no limit to the number of mobile stations or devices that one passenger may register. Accordingly, a passenger may register a cellular phone or smart phone, lap top computer, gaming device or other combination or wireless communications devices.

Current onboard vehicle or aircraft communications systems also do not provide a mechanism to offer service priority to select passengers. For example, to give first class seats higher priority to access the communications system than economy classes. Current systems also cannot determine if a mobile station that is trying to register is from a valid or occupied seat location. A higher level of security is needed where a mobile station has to correspond to a valid or occupied seat. Further, current systems cannot provide service priority to aircraft crew except by manually entering the mobile number into the system. Accordingly, a method, system and computer program product that overcomes these disadvantages to exiting onboard vehicle communications system is needed.

### BRIEF SUMMARY

According to one aspect of the present disclosure, a method for registering a mobile station of a passenger may include receiving a request to register the mobile station of the passenger with a communications system on board a vehicle. The method may also include validating a personal or passenger identification number (PIN) for registration with the communications system. The PIN may include at least a portion of a name of the passenger and seat information of the passenger. The method may additionally include registering the mobile station of the passenger with the communications system in response to the PIN being validated. The method may further include providing a predetermined class of service to the passenger based on the PIN.

Advantageously, the method may further include limiting a number of mobile stations registered by the passenger. Preferably, the method may limit the number of mobile station registered by the passenger based on the predetermined class of service.

Advantageously, the method may further include determining if a limit of a number of registered mobile stations for the passenger will be exceeded by registering the mobile station in the registration request and transmitting a registration denied message to the mobile station in response to the limit of the number of registered mobile stations for the passenger being exceeded if the mobile station is registered.

Advantageously, the vehicle of the method may be an aircraft and the method may include providing an interface for use of text messaging or other data transfer method to request onboard services.

Advantageously, the method may include providing an interface to access a communications network outside the vehicle and providing an interface for requesting services onboard the vehicle.

According to another aspect of the present disclosure, a communications system onboard a vehicle may include a base transceiver station for wireless communications with a mobile station of a passenger and to receive a request to register the mobile station of the passenger with the communications system on board the vehicle. The system may also include a processor and a communications link between the base transceiver station and the processor. A module operating on the processor may validate a personal or passenger identification number (PIN) for registration with the communications system. The PIN may include at least a portion of a name of the passenger and seat information of the passenger. The system may include another module operating on the processor to register the mobile station of the passenger with the communications system in response to the PIN being validated.

According to a further aspect of the present disclosure, a computer program product for registering a mobile station of a passenger may include a computer readable storage medium having computer readable program code embodied therewith. The computer readable program code may include computer readable program code configured to receive a request to register the mobile station of the passenger with a passenger communications system on board a vehicle. The computer readable program code may also include computer readable program code configured to validate a personal or passenger identification number (PIN) for registration with the passenger communications system, wherein the PIN comprises at least a portion of a name of the passenger and seat information of the passenger. The computer readable program code may additionally include computer readable program code configured to register the mobile station of the passenger with the passenger communications system in response to the PIN being validated. The computer readable program code may further include computer readable program code configured to provide a predetermined class of service to the passenger based on the PIN.

Advantageously, the computer program product may further include computer readable program code configured to generate a passenger name and seat location database using a passenger manifest, computer readable program code configure to generate the PIN based on a passenger name and seat location, computer readable program code configured to transmit a request for the PIN of the passenger to the mobile station of the passenger in response to the mobile station requesting to register with the passenger communications system, and computer readable program code configured to compare the PIN received from the mobile station of the passenger to a PIN based on information in the passenger name and seat location database.

### BRIEF DESCRIPTION OF THE SEVERAL VIEWS OF THE DRAWINGS

The present disclosure is further described in the detailed description which follows in reference to the noted plurality of drawings by way of nonlimiting examples of embodiments of the present disclosure in which like reference numerals represent similar parts throughout the several views of the drawings and wherein:

Figures 1A and 1B (collectively Figure 1) are a flow chart of an example of a method for passenger mobile station registration with a vehicle communications system in accordance with an embodiment of the present disclosure.

Figure 2 is a block schematic diagram of an example of a vehicle communications system including a system for registering passenger mobile stations in accordance with an embodiment of the present disclosure.

Figure 3 is an example of a screen or graphical user interface (GUI) presentable on a control panel or interface providing registration information for each passenger in accordance with an embodiment of the present disclosure.

Figure 4 is an example of another screen or GUI that may be presented on a control panel or interface to manual register a mobile station with a vehicle communications system in accordance with an embodiment of the present disclosure.

### DETAILED DESCRIPTION

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

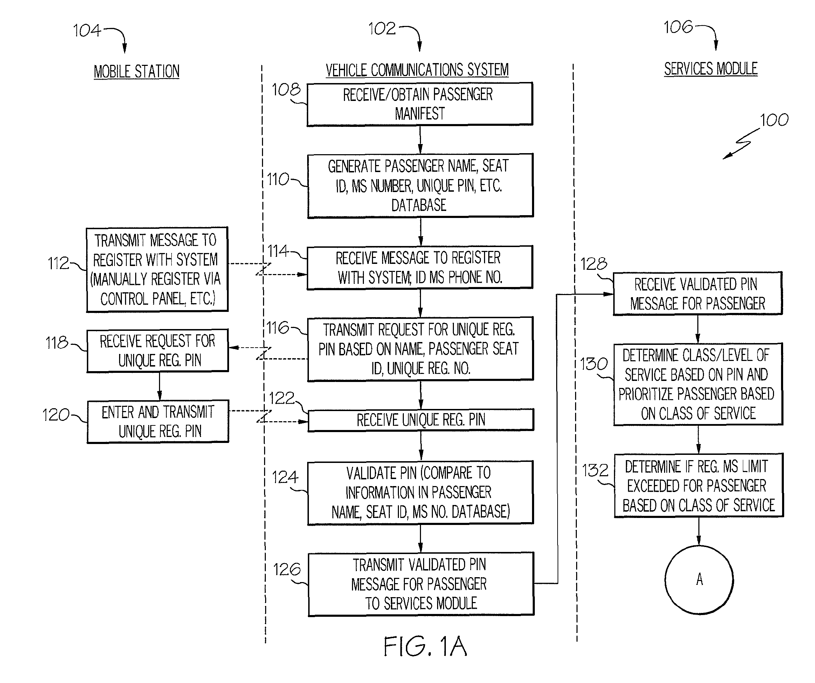

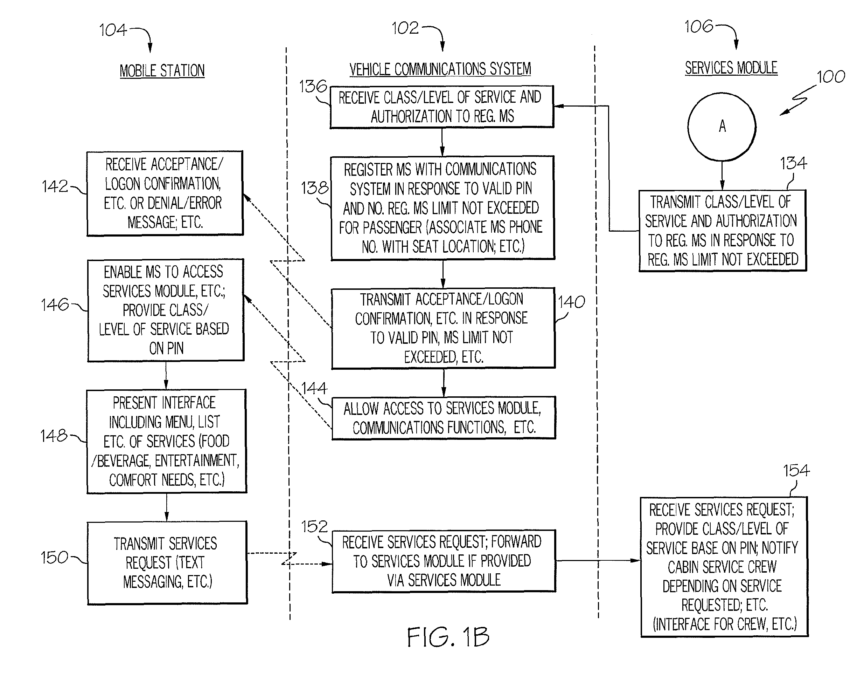

Figures 1A and 1B (collectively Figure 1) are a flow chart of an example of a method 100 for passenger mobile station registration with a vehicle communications system 102 in accordance with an embodiment of the present disclosure. The flow chart is divided into different portions corresponding to operations or functions that may be performed by a mobile station 104, the vehicle communication system 102 and a services module 106 operating on a processor of a server or other computer system. The flow chart illustrates how the vehicle communications system 102, the mobile station 104 and the services module 106 may interface and communicate with one another to provide the user or passenger services and functions described below. As described herein, the vehicle communications system 102 may be or may include a picocell or small cellular base station onboard an aircraft or other vehicle, such as a ship, terrestrial vehicle or other mode of transportation. The vehicle communication system 102 may also include a processor or server for performing the functions or operations described herein. The systems and methods described may also have applications in other facilities or environments other than vehicles.

The mobile station 104 may be a cellular phone, smart phone, laptop computer or other mobile communications device capable of performing the functions described herein.

In block 108, a passenger manifest may be received or obtained. The passenger manifest may include passenger information such as a list of names of the passengers and their corresponding seat information. The passenger manifest may be transmitted from another server or system or requested by the vehicle communications system 102 and transmitted from another server or system of an airlines or other commercial carrier.

In block 110, a passenger name, seat database, and unique registration personal or passenger identification number (PIN) may be generated using the passenger manifest. The PIN may include at least a portion of a name of the passenger and seat information of the passenger, such as a seat number. The seat number may correspond to a seat location in the vehicle or aircraft. The PIN or seat number or location may determine or correspond to a predetermined class or group of services that are available or may be accessed by the passenger. For example, first class passengers may be provided higher priority or a different set of services compared to passengers in other seat locations. Similarly, special passengers or dignitaries with special PINs or seat locations may have a higher priority and services compared to other passengers. The passenger name and seat database may include a passenger name and corresponding seat information, such as seat identification (ID), seat number or seat location of the passenger. The passenger name and seat database may also include mobile station phone numbers for each passenger. The passenger and seat database may include a list of all registered users or passengers including the passenger's name, mobile station number, seat location, seating class or class or level of service as well as any other information that may be helpful to provide services to the user or passenger.

In block 112, a message may be transmitted from the mobile station 104 to register with the vehicle communications system 102. The message may be transmitted wirelessly from the mobile station 104 to the vehicle communications system 102. In another embodiment or under some circumstances, the mobile station 104 may be manually registered with the vehicle communications system 102 using a control panel or other interface. For example, the control panel or interface may be a mobile communications device or computer that may be used by a crew member to manually register a passenger's mobile station with the vehicle communication system 102. The mobile station 104 may be the device of any passenger or crew member. As described in more detail below, the mobile station 104 may also be the device of a special passenger or crew member, such as an air marshal or other dignitary or very important person (VIP) that may require priority communications or services or other special treatment.

In block 114, the message to register the mobile station 104 with the system 102 may be received by the vehicle communications system 102. The vehicle communication system 102 may also receive or identify the phone number of the mobile station 104 using standard mobile registration methods.

In block 116, a request for a unique registration personal or passenger identification number (PIN) may be transmitted to the mobile station 104 of the passenger.

In block 118, the request for the unique registration PIN may be received by the mobile station 104 and in block 120 the user or passenger may enter the PIN into the mobile station 104 and the mobile station 104 may transmit the PIN to the vehicle communication system 102. The passenger may be advised of the correct format and content of his PIN by a card in a seat back in the aircraft or by some other mechanism.

In block 122, the mobile communication system 102 may receive the unique registration PIN transmitted from the passenger's mobile station 104. In block 124, the vehicle communication system 102 may validate the PIN. The PIN may be validated by comparing information corresponding to the PIN to information in the passenger and seat database or by comparing the PIN to an expected PIN preformed in block 110. As described herein, a PIN validation module may compare the PIN submitted by the passenger to the expected PIN preformed in block 110 and stored in the passenger database. In block 126, if the PIN is validated, a validated PIN message for the passenger may be transmitted to the services module 106.

In block 128, the validated PIN for the passenger may be received by the services module 106. In block 130, a class or level of service for the passenger may be determined based on the PIN which as previously discussed may also correspond to or identify a seat location in the vehicle. The passenger's services and communications may be prioritized based on the class or level of service.

Under some circumstances or depending upon what class or level of services a passenger may be provided, there may be a limit to the number of mobile stations that the passenger may register with the vehicle communication system 102 simultaneously. In block 132, a determination may be made if a registered mobile station limit for the passenger, based on the class of service, will be exceeded by registering the current mobile station in the registration request from the passenger.

In block 134 (Figure 1B), the class or level of service and authorization to register the mobile station may be transmitted to the vehicle communication system in response to the registered mobile station limit not being exceeded. If the registered mobile station limit would be exceeded a denial of authorization to register the mobile station may be transmitted to the vehicle communications system 102 which would be further communicated to the mobile station 104 as described below.

In block 136, the class or level of service and authorization to register the mobile station or denial of registration may be received by vehicle communication system 102. In block 138, the mobile station 104 may be registered with the vehicle communication system 102 in response to a valid PIN and the number of registered mobile stations not exceeding the limit for the passenger's class of service. Once the mobile station 104 has been registered, the mobile station number can be associated with the seat location and any other information, such as class of service, etc in the passenger database or other location.

In block 140, a registration acceptance or logon confirmation or similar message may be transmitted to the mobile station 104 in response to the mobile station 104 being registered with the vehicle communications system 102.

In block 142, a registration acceptance or logon confirmation message may be received by the mobile station 104 and presented to the passenger or user by the mobile station 104. If registration was not successful, a denial or error message may be transmitted to the mobile station 104. The denial or error message may indicate a reason for the registration failure, such as for example an invalid PIN, the registered mobile station limit would be exceeded or some other reason.

In block 144, access to the services module 106, communications functions or features of the vehicle communications system 102 and any other services based on the class of service provided to the passenger may be authorized or enabled. A message may be transmitted to the mobile station 104 to enable access to the services. The same message or another message may be transmitted to the mobile station 104 for presentation to the passenger on the mobile station to advise the passenger that the services and features are available or have been enabled.

In block 146, the message or messages to enable the mobile station 104 for access to the services module 106 and other features of the vehicle communications system 102 and to provide the class or level of service based on the passenger's PIN may be received by the mobile station 104.

In block 148, an interface that may include a menu or list of services and other features available to the passenger based on the passenger's PIN and class of service may be presented to the passenger on the mobile station 104. For example, the menu or list of services may include food and beverage selections, entertainment selections, comfort needs and similar amenities. The interface may also include features to allow the passenger to configure the services or other features provided by the communications system 102 or the services module 106.

In block 150, a services request may be entered by the passenger into his mobile station 104 and transmitted to the vehicle communications system 102. Registering with the vehicle communications system 102 may enable text messaging onboard the vehicle or aircraft. Accordingly, the services request may be made using text messaging or any other mode of communications that may be enabled or supported by the vehicle communications system 102.

In block 152, the services request may be received by the vehicle communication system 102. Depending upon the nature of the request, the service may be processed by the vehicle communication system 102 or forwarded to the services module 106 to satisfy the request.

In block 154 the services request may be received by the services module 106. As previously discussed, the class or level of service may be provided based on the PIN. The services module 106 may include an interface to notify the cabin service crew depending upon the service requested, such as a request for food, beverages or other passenger needs. The crew may also respond back to the passenger using the interface. The interface may be a graphical user interface (GUI) presented on a computer or other communications device that may be mobile.

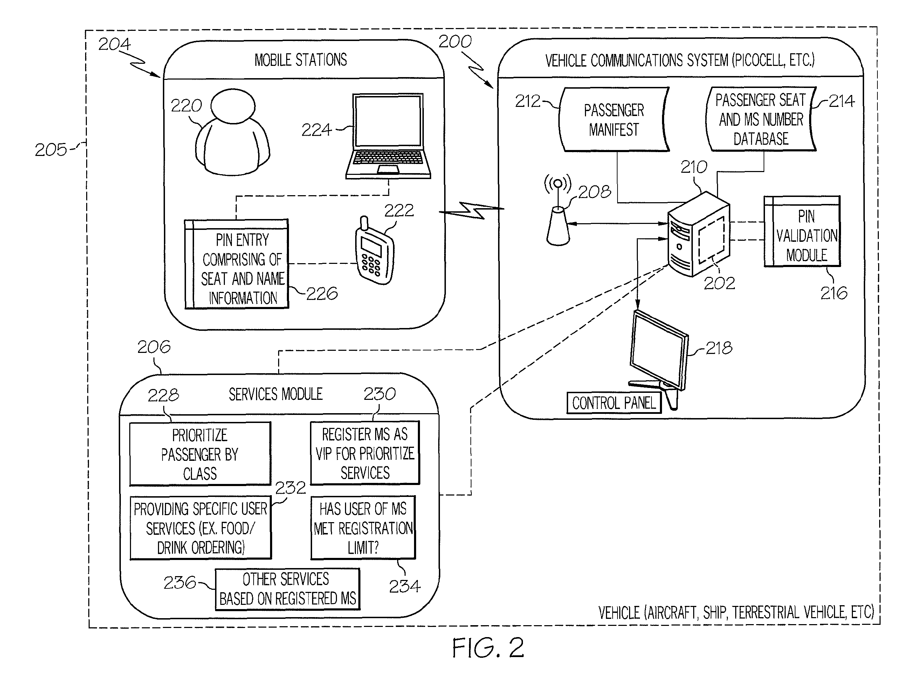

Figure 2 is a block schematic diagram of an example of a vehicle communications system 200 including a system 202 or module for registering passenger mobile stations 204 with the vehicle communications system 200 in accordance with an embodiment of the present disclosure. The functions or operations of the method 100 associated with the vehicle communications system 102 in Figures lA and 1B may be embodied in and performed by the vehicle communications system 200. The functions or operations of the method 100 associated with the mobile station 104 in Figures 1A and 1B may be embodied in and performed by each of the Mobile stations 204, and the functions or operations of the method 100 associated with the services module 106 may be embodied in and performed by a services module 206 in Figure 2.

Similar to that previously described, the vehicle communication system 200 may be or may include a picocell or small cellular system for radio frequency communications within a vehicle 205, such as an aircraft or other vehicle. The vehicle communications system 200 may include a base transceiver station 208 to transmit and receive radio frequency signals to and from mobile stations 204. The base transceiver station 208 may be similar to base transceiver stations in other picocells or small cellular systems currently in use.

The vehicle communication system 200 may also include a server 210 or picocell server to store and run computer readable program code to perform the functions and operations similar to those described in association with vehicle communications system 102 in Figures 1A and 1B. The system 202 or module for registering passenger mobile stations 204 with the vehicle communications system 200 may be embodied in the server 210 or in a separate device. Accordingly, the server 210 may generate and validate PINs. The server 210 may also receive passenger manifest information 212 from a source, such as an airline server at a ground facility or other location off the vehicle 205. The server 210 may process the passenger manifest information 212 and may create and maintain a passenger name and seat ID or location database 214 (passenger and seat database). The passenger and seat database 214 may also include a corresponding phone number for the mobile station or stations of the passenger. The passenger and seat database 214 may be stored on the server 210 or may be stored on a separate storage device.

The server 210 may also include a PIN validation module 216 to validate PINs transmitted to the vehicle communication system 200 or base transceiver station 208 by the mobile station 204 to request registration with the vehicle communication system 200 for access to the services provided by the system 200 and services module 206. As previously described, the PIN may include at least a portion of a name of the passenger and seat information of the passenger, such as a seat ID or seat location in the vehicle 205. The PIN may also include other information. The PIN validation module 216 may validate that the mobile station 204 should have access to register with the vehicle communication system 200 by comparing the PIN sent from the mobile station 204 with information in the passenger and seat database 214. Information for submitting the PIN may be on a card in a seat back of the vehicle 205 or any other location easily accessible by the passenger. The PIN corresponding to the seat location may then determine the class or level of services to be provided to the passenger. Once registered, the PIN validation module 216 may transmit the registration data to the passenger and seat database 214. The passenger and seat database 214 would include a list of all registered users or passengers including the passenger's name, mobile station number, seat location, seating class or class or level of service as well as any other information that may be helpful to provide services to the user or passenger.

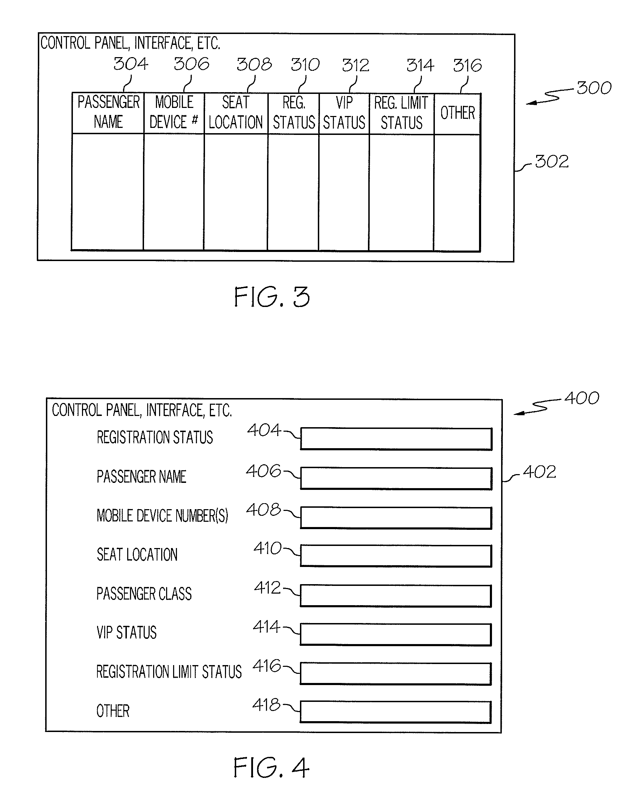

The vehicle communications system 200 may also include an interface or control panel 218 to control operation of the vehicle communication system 200. The interface or control panel 218 may be used to report on the registration information of registered users or passengers and may also provide an interface for manually registering a passenger, dignitary or VIP or the mobile station of a crew member to provide prioritization or special services. The interface or control panel 218 may also be part of a mobile or portable device so that a crew member may carry it through an aircraft cabin for manual registration of mobile stations 204 or for other purposes. The interface or control panel 218 may also report service requests from mobile stations 204. An example of registration information that may be presented on the interface or control panel is illustrated in Figures 3 and 4 as described below.

Examples of mobile stations 204 may include a cellular phone or smart phone 222, lap top computer 224 or similar communications devices. The passenger may enter the PIN comprising at least a portion of the passenger's name and seat information into the mobile station 222 or 224 which may transmit the PIN wirelessly to the base transceiver station 208.

The services module 206 may also be embodied in and performed by the server 210. Examples of the features or services that the service module 206 may provide may include but is not necessarily limited to prioritization of passengers by class 228; registering a mobile station 204 as a VIP or dignitary for prioritized or higher-level services 230; providing specific user services or notifying a crew member to provide specific passenger services, such as food or drink ordering, entertainment requests, or other passenger requests 232; determining if a user or passenger has met a registration limit of the number of mobile stations the passenger may register based on the passenger's class of service 234; and other services 236 based on the registered mobile station's class of service.

In the context of the vehicle 205 being an aircraft, the operations and features of the vehicle communications system 200 include enhanced security implementations by using passenger manifest information for registration and PIN generation. The PIN validation module 216 may require the PIN before registering the mobile station 204 with the vehicle communications system 200 or aircraft picocell network. The server 210 or aircraft picocell server may command the base transceiver station 208 to transmit a PIN request to the mobile station 204. The PIN request may be displayed to the user or passenger on his mobile station 204. As previously discussed, the PIN may be created using at least a portion of the user's or passenger's name and seat location by the PIN validation module 216. The passenger may be advised of the correct PIN format and content by a card in the seat back or by some other arrangement. The passenger may enter the PIN into his mobile station 204 which may transmit the PIN to the base transceiver station 208. The base transceiver station 208 transfers the PIN to the server 210. The PIN validation module 216 may compare the PIN received from the passenger to the correct PIN generated by the PIN validation module 216 and stored in the passenger seat location and mobile station number database 214. The mobile station 204 may be granted access to the vehicle communications system 200 or aircraft picocell in response to the PIN being validated. This can prevent unauthorized access to the aircraft picocell network by disabling any automatic aircraft picocell network registering.

The aircraft passenger manifest 212, which contains a list of the flight passengers and their corresponding seat locations and is electronically stored on the aircraft systems may be copied to the server 210 or aircraft picocell server. Rather than just using a random number, a PIN number which is unique per passenger and seat location may be generated by the PIN validation module 216 as previously described. The PIN including a passenger name and corresponding seat location may ensure that the passenger has a valid seat location and the PIN may then be used to authorize other services based on a class of service corresponding to the seat location.

Once the user or passenger registers with the vehicle communications system 200 or aircraft picocell, the server 210 or aircraft picocell server now can associate a mobile station number to a seat location. This can be used in multiple services and functions as previously described.

Figure 3 is an example of a screen or graphical user interface (GUI) 300 presentable on a control panel 302 or interface providing registration information for each passenger in accordance with an embodiment of the present disclosure. The GUI 300 may include a list of passenger registration information. The list of passenger registration information may be in a tabular format or other format. For example, the passenger registration information may include fields or columns for passenger names 304, mobile device numbers 306, seat location 308, registration status 310, VIP status 312, registration limit status 314 or current number of registered devices and the passenger's limit, and any other information 316 that may be of interest or helpful in providing services.

Figure 4 is an example of another screen or GUI 400 that may be presented on a control panel 402 or interface to manually register a mobile station with a vehicle communications system in accordance with an embodiment of the present disclosure. The GUI may include fields for entering a registration status 404, a passenger name 406, a mobile device number or numbers 408, a seat location 410, a passenger class 412, a VIP status 414, a registration limit status 416 and any other information 418 that may be of interest or use.

The system and method enables prioritization of system functions for certain passengers (VIPs, crew or air marshals). This can provide an easier means for air marshals to discretely have priority access to the communications system and its functions. The system may also be implemented to provide airline frequent flyers access to services over other passengers. The system and method also allows segregation of passenger services based on the aircraft seat class. Using the name and seat information the system can selectively provide services to passengers based on their location in the aircraft. Possible implementations of this may be that first class passengers can get priority services over other passengers and to allow certain services in first class, such as for example allowing incoming phone calls at night which could be disabled for other aircraft classes.

The system also implements a method to identify the mobile station user without transmitting data off the aircraft. Current implementations of aircraft picocell systems will transmit data off the aircraft to terrestrial ground networks to determine what the name of a person is based on the mobile station number. By using the name and seat location, the system would not need to do the typical data transmission. This would prevent the expense of data transfer charges by having the identity stored locally on the aircraft picocell server.

Text messaging or similar data transfers for passenger services such as food and drink ordering may also be used. This would be an additional service or function that could result from knowing the passenger's seat location and name information. Passengers may use their mobile stations which are registered with the aircraft picocell system to access any number of passenger's services. Because the picocell system knows the seat location of every registered mobile station, text messages or data transfers could be used by aircraft crew to provide services. The aircraft picocell server may track purchases or to provide other functions which may be customized to a specific passenger. For example, the user may send a text message to a predetermined aircraft crew mobile station number with a food order and the crew member could then provide the food to the seat location provided by the aircraft picocell server.

The flowcharts and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of embodiments of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to embodiments of the disclosure in the form disclosed. Many modifications and variations will be apparent to those of ordinary skill in the art without departing from the scope of embodiments of the disclosure. The embodiment was chosen and described in order to best explain the principles of embodiments of the disclosure and the practical application, and to enable others of ordinary skill in the art to understand embodiments of the disclosure for various embodiments with various modifications as are suited to the particular use contemplated.

Although specific embodiments have been illustrated and described herein, those of ordinary skill in the art appreciate that any arrangement which is calculated to achieve the same purpose may be substituted for the specific embodiments shown and that embodiments of the disclosure have other applications in other environments. This application is intended to cover any adaptations or variations of the present disclosure. The following claims are in no way intended to limit the scope of embodiments of the disclosure to the specific embodiments described herein.

## Claims

1. A method for registering a mobile station (104) of a passenger, comprising:
receiving a request to register the mobile station (104) of the passenger with a communications system (102) on board a vehicle;
validating a personal or passenger identification number (PIN) for registration with the communications system, wherein the PIN comprises at least a portion of a name of the passenger and seat information of the passenger;
registering the mobile station (104) of the passenger with the communications system (102) in response to the PIN being validated; and
providing a predetermined class of service to the passenger based on the PIN.

2. The method of claim 1, further comprising generating a passenger name and seat location database using a passenger manifest (212).

3. The method of claim 1 or claim 2, further comprising transmitting a request for the PIN of the passenger to the mobile station (104) of the passenger in response to the mobile station requesting to register with the communications system (102).

4. The method of any preceding claim, wherein validating the PIN comprises comparing the PIN received from the mobile station (104) of the passenger to a PIN based on information in a passenger name and seat location database (214).

5. The method of any preceding claim, further comprising manually registering the mobile station (104) of the passenger using a control interface by a cabin crew member based on the PIN.

6. The method of any preceding claim, further comprising determining the predetermined class of service based on the PIN.

7. The method of any preceding claim, further comprising associating a phone number of the mobile station (104) to a seat location of the passenger in response to registering the mobile station of the passenger with the communications system (102).

8. The method of any preceding claim, further comprising prioritizing use of the communications system (102) based on the PIN or the predetermined class of service.

9. The method of any preceding claim, further comprising identifying the mobile station (104) of the passenger without transmitting data to a system outside the vehicle.

10. The method of any preceding claim, further comprising preventing automatic access to the communications system (102) or services (106) without manual passenger intervention or interaction with the mobile station (104).

11. The method of any preceding claim, further comprising creating a unique PIN that identifies a passenger's name and seat location in the vehicle.

12. A communications system onboard a vehicle (205), comprising:
a base transceiver station (208) for wireless communications with a mobile station (204) of a passenger and to receive a request to register the mobile station of the passenger with the communications system (200) on board the vehicle (205);
a processor;
a communications link between the base transceiver station and the processor;
a module (216) operating on the processor to validate a personal or passenger identification number (PIN) for registration with the communications system, wherein the PIN comprises at least a portion of a name of the passenger and seat information of the passenger;
a module (202) operating on the processor to register the mobile station of the passenger with the communications system in response to the PIN being validated.

13. The system of claim 12, further comprising a services module (206) to provide a predetermined class of service to the passenger based on the PIN.

14. The system of claim 12 or claim 13, further comprising:
a passenger name and seat location database (214) generated from a passenger manifest (212); and
a module (216) to compare the PIN received from the mobile station of the passenger to a PIN based on information in the passenger name and seat location database.

15. The system of any one of claims 12 to 14, wherein the vehicle (205) is an aircraft, the system further comprising an interface (218) for use in requesting onboard services.
